# EUROPEAN PATENT APPLICATION

(11) **EP 0 645 771 A2**
(43) Date of publication of application: **29.03.1995**
(21) Application number: 94307081.3
(22) Date of filing: 28.09.1994
(51) Int. Cl.: G11B 25/06, G11B 33/02, G11B 15/665, B29C 45/14

(54) **Chassis for magnetic recording/reproducing apparatus and method for manufacturing the same**

(30) Priority: 28.09.1993 JP 241246/93; 28.09.1993 JP 241247/93
(71) Applicant: KABUSHIKI KAISHA TOSHIBA, Kawasaki-shi, Kanagawa-ken 210 (JP); TOSHIBA AVE CO., LTD, Minato-ku, Tokyo 105 (JP)
(72) Inventor: Eguchi, Naoki, c/o Intellectual Prop. Div., Minato-ku, Tokyo (JP); Ikezawa, Minoru, c/o Intellectual Prop. Div., Minato-ku, Tokyo (JP); Kato, Masao, c/o Intellectual Prop. Div., Minato-ku, Tokyo (JP); Araki, Kazutosi, c/o Intellectual Prop. Div., Minato-ku, Tokyo (JP); Kawai, Yuji, c/o Intellectual Prop. Div., Minato-ku, Tokyo (JP)
(74) Representative: Muir, Ian R.

(57) **Abstract**

A chassis for magnetic recording/reproducing apparatus provided with a metal plate, at least a tape driving system and a tape loading system respectively mounted on the metal plate, which includes a plurality of molded bodies molded in an outsert manner on the metal plate using a plural types of thermoplastic materials which are different each other in their properties, to support the tape driving system and the tape loading system.

## Description

The present invention relates to magnetic recording/reproducing apparatus, for instance, video tape recorder (VTR) and, more particularly, to a chassis of magnetic recording/reproducing apparatus, which is used for mounting a cassette loading system, tape loading system, tape driving system, for example, and its manufacturing method.

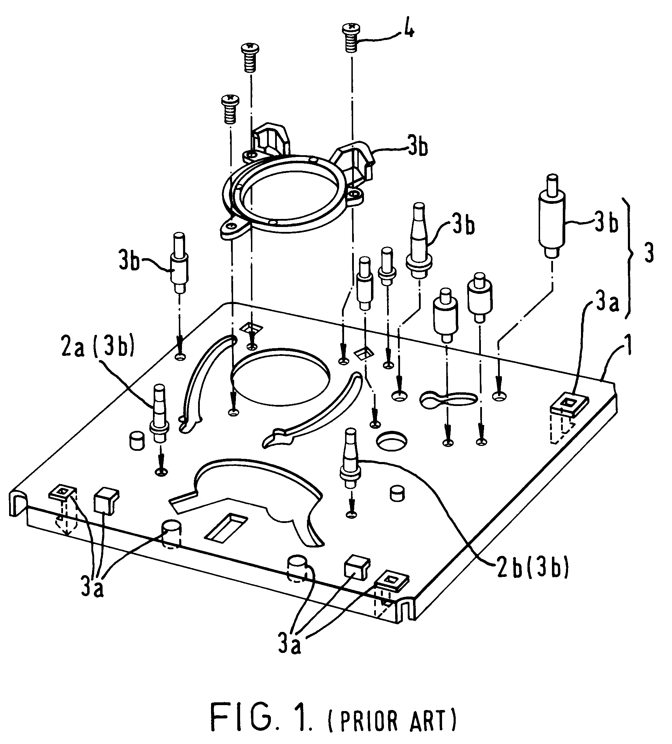

In general, in this type of chassis, a pair of reel shafts 2a, 2b on which reel hubs of a tape cassette are mounted are vertically installed at specific positions on a metal plate 1 as illustrated in FIGURE 1. Corresponding to these reel shafts 2a, 2b, there are mounted a plurality of mounting base members 3 comprising a tape loading system to pull out a tape and load it on a rotary cylinder with a rotating head mounted, a tape driving system including a tape guide mechanism to guide a loaded magnetic tape when traveling, and a mode control system. Therefore, in such a chassis, accuracies of the tape loading system, the tape driving system and the mode control system are decided depending upon the installing accuracy of the mounting base members 3 and their installing accuracy largely affects the manufacturing of magnetic recording/reproducing apparatus such as VTRs, and the like.

So, such chassis mounting base members 3, e.g., such parts 3b as a brake member mounting hook of the tape driving system, a support of the mode control system, etc. for which relatively low strength and accuracy are demanded are molded in an outsert manner and installed using thermoplastics, e.g., polyoxymethylene (POM), etc., while such parts 3b as a cylinder mount for fixing a rotary cylinder, a tape guide post for controlling a magnetic tape with high accuracy against the rotary cylinder, the reel shafts 2a, 2b, etc. for which a high strength and a high accuracy are demanded are manufactured by, for instance, machining metallic materials, and then mounted on the metal plate 1 using fasteners such as screws 4, a caulking operation, and the like.

However, this chassis has problems in that the number of parts comprising the tape loading system and the tape driving system increases greatly; the control of parts is extremely troublesome; many processes are required; the manufacturing operation including the assembling operation is extremely troublesome. Furthermore, as relatively many metallic materials are used and fastening operations using screws and caulking operations are needed, the weight will increase and at the same time, it becomes difficult to promote downsizing.

So, it is considered to improve the defects described above by molding in an outsert manner parts for which high strength and high accuracy are rigorously demanded on the metal plate using thermoplastic material having a low shrinkage factor and high molding die copying property. In this case, it is not sufficiently simple to mold in the outsert manner mounting base members using thermoplastic materials having excellent characteristics but it is demanded to achieve the highly reliable outsert molding without adversely affecting other parts.

For instance, there is a problem that as parts are molded in an outsert manner at a high density, the metal plate is thermally deformed and after the outsert molding, a highly reliable and accurate operation of the mechanical portions of the tape loading system and the tape driving system that are assembled to the chassis may become difficult.

As described above, a conventional chassis for magnetic recording/reproducing apparatus has problems in that as the parts count increases, a parts control and a manufacturing process including an assembling process are extremely troublesome and promotion of downsizing and achieving light weight are difficult.

The present invention seeks to provide a chassis for magnetic recording/reproducing apparatus, which has a simple structure and is capable of reducing the parts count, simplifying the manufacturing process, promoting downsizing and achieving light weight.

According to the present invention, there is provided a chassis, for a magnetic recording/reproducing apparatus provided with a metal plate, and comprising a plurality of molded bodies molded in an outsert manner on the metal plate using a plurality of thermoplastic materials which have different properties, to support a tape driving system for the apparatus.

According to the structure described above, by performing the outsert molding selectively using thermoplastic materials which are different each other in their properties, it becomes possible to mold in the outsert manner those parts for which high strength and high accuracy are rigorously demanded out of parts comprising the tape driving system and the tape loading system and also such parts having various characteristics as mounting hooks, etc., for which a relatively low strength and a low accuracy are demanded, on a metal plate. Therefore, it becomes possible to mold in the outsert manner those parts which so far required fastening by screws, caulking, etc., and thus it becomes possible to simplify the manufacturing and assembling operations and promote downsizing and achieving a light weight.

Further the present invention provides the method for manufacturing a chassis for magnetic recording/reproducing apparatus having at least a tape driving system and a tape loading system mounted on a metal plate, having the steps of molding in an outsert manner a plurality of molded bodies on the metal plate by feeding a plurality of thermoplastic materials which are different each other in their properties, starting from the one with the highest thermal denaturation temperature, and mounting parts constituting the tape driving system and the tape loading system onto the molded bodies.

According to the structure as described above, by performing the outsert molding of products including parts comprising a tape driving system and a tape loading system using thermoplastic materials which are different each other in their properties, starting from the one having the highest thermal denaturation temperature, it becomes possible to mold in the outsert manner those parts of the rotary cylinder, for which a high strength and a high accuracy are rigorously demanded based on the shrinkage factors of thermoplastic materials and such parts having various characteristics as mounting hooks, etc., for which a relatively gentle strength and a low accuracy are demanded, on a metal plate. Therefore, it becomes possible to mold in the outsert manner those parts so far requiring fastenings with screws, caulking, etc., and thus it becomes possible to simplify the manufacturing and assembling operations and promote downsizing and achieving a light weight.

Further, in a method for manufacturing a chassis for magnetic recording/reproducing apparatus comprising a cassette loading system, a tape loading system and a tape travel drive system according to the present invention, a plurality of structural members are molded in an outsert manner on a metal plate and then parts of the metal plate are formed into two edges which are formed to face each other by bending the parts of the metal plate, thus accommodating the cassette loading system on the edges and the tape loading system and the tape travel drive system between the edges.

According to the structure as described above, the cassette loading system, the tape loading system and the tape travel drive system are mounted on the same metal plate. Further by bending the parts of the metal plate into two edges after the structural members are molded in the outsert manner, not only the manufacturing process is simplified but also it is able to increase the locating accuracy of the cassette loading system in relation to the tape travel drive system and the tape loading system.

Further in the present invention, the chassis for magnetic recording/reproducing apparatus provided with a metal plate, at least a tape driving system and a tape loading system respectively mounted on the metal plate has a structural part receiving hole provided on the metal plate into which parts of the tape driving system and the tape loading system are assembled, and a molded body which is molded in an outsert manner on the metal plate around the structural part receiving hole, of which side wall thickness facing the wall of the structural part receiving hole is thinner than the thickness of other portions.

According to the structure described above, a molded body that is molded in an outsert manner on the metal plate is formed thinner in thickness at its side wall facing the wall of a structural part receiving hole on the metal plate than other portions and therefore, a molding pressure given to the structural part receiving hole to which the thin thickness points is facing is reduced at the time of molding. Thus, it becomes possible to mount the molded body on the metal plate at a high density in the outsert molding and it also becomes possible to mold in the outsert manner those parts of the rotary cylinder, for which high strength and high accuracy are rigorously demanded out of parts comprising the tape driving system and the tape loading system and such parts having various characteristics as mounting hooks, etc., for which relatively gentle strength and low accuracy are demanded, on a metal plate. Therefore, it becomes possible to mold in the outsert manner many parts which so far required fastening by screws, caulking, etc., and thus it becomes possible to intend to simplify the manufacturing and assembling operations, promote downsizing and achieve light weight of a chassis.

Further the present invention provides the method for manufacturing a chassis for magnetic recording/reproducing apparatus by loading a metal plate in an outsert molding machine and a plurality of molded bodies including parts comprising at least a tape driving system and a tape loading system by molding in an outsert manner thermoplastic materials, characterized in that the metal plate is suppressed its deformation at a vicinity of the outsert molding point on the metal plate to prevent the deformation when the molded body is molded in the outsert manner.

According to the structure described above, when molded bodies are molded in an outsert manner on the metal plate, the vicinity of the outsert molding point of the metal plate is suppressed to prevent the deformation by a molding pressure, and thus the high density mounting of outsert moldable parts on the metal plate can be achieved. Therefore, it becomes possible to mold in the outsert manner those parts so far requiring fastening with screws, caulking, etc. and the rotary cylinder, for which high strength and high accuracy are rigorously demanded and such parts having various characteristics as mounting hooks, etc., for which relatively gentle strength and low accuracy are demanded, on a metal plate out of various parts comprising the tape driving system and the tape loading system, and it can be intended to simplify the manufacturing and assembling operations, promote downsizing and achieving light weight of a chassis.

Additional objects and advantages of the present invention will be apparent to persons skilled in the art from a study of the following description and the accompanying drawings.

For a better understanding of the present invention and to show how it may be brought into effect,reference will now be made,by way of example,to the accompanying drawings, wherein:
FIGURE 1 is a diagram showing a conventional chassis for magnetic recording/reproducing apparatus;
FIGURE 2 is a diagram showing a chassis for magnetic recording/reproducing apparatus of a first embodiment according to the present invention;
FIGURE 3 is a diagram showing a part of the chassis shown in FIGURE 2 in detail;
FIGURE 4 is a diagram for explaining the assembly state shown in FIGURE 3;
FIGURE 5 is a diagram showing the manufacturing process of the chassis shown in FIGURE 2;
FIGURE 6 is a diagram showing a first outsert molding machine that is used for manufacturing the chassis as shown in FIGURE 2;
FIGURES 7, 8 are diagrams showing a second outsert molding machine that is used for manufacturing the chassis as shown in FIGURE 2;
FIGURE 9 is a diagram showing the details of a molding die shown in FIGURES 7, 8;
FIGURE 10 is a diagram showing the structure of a runner formed on a metal plate;
FIGURE 11 is a diagram showing the structure of a runner formed on a metal plate;
FIGURE 12 is a diagram showing the structure of a runner formed on a metal plate;
FIGURE 13 is a diagram for explaining another outsert molding machine for manufacturing the chassis as shown in FIGURE 2;
FIGURE 14 is a diagram showing essential parts of a chassis for magnetic recording/reproducing apparatus involved in a second embodiment of the present invention;
FIGURE 15 is a diagram shown for explaining the details of the molding dies shown in FIGURE 5;
FIGURE 16 is a diagram showing the outsert molding state in FIGURE 5 (projections and depressions for suppressing the deformation are not shown);
FIGURE 17 is a diagram showing one aspect of a second embodiment of the present invention; and
FIGURE 18 is a diagram showing another aspect of the second embodiment of the present invention;

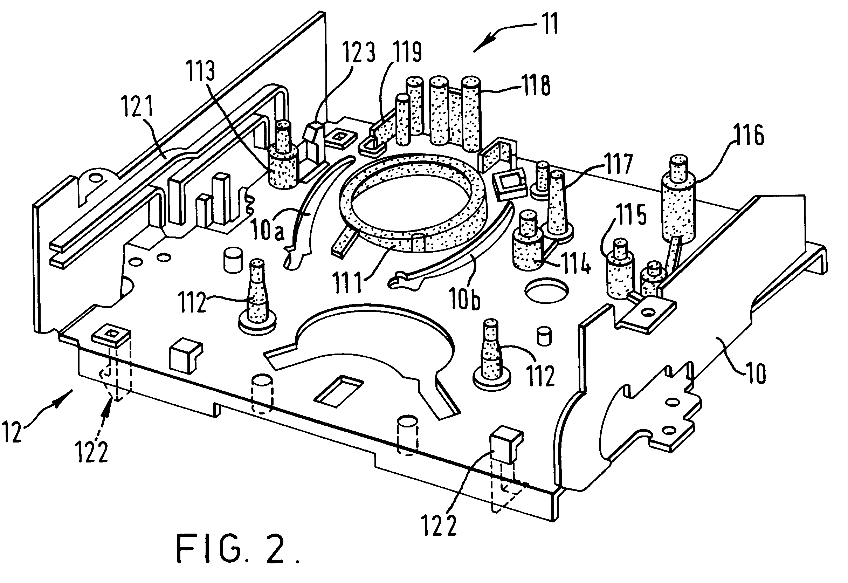

The present invention will be described in detail with reference to the attached drawings FIGURES 2 through 18.

Referring now to FIGURES 2 through 12, a first embodiment of the chassis for magnetic recording/reproducing apparatus according to the present invention will be described in detail.

In FIGURE 2, on a metal plate 10 a plurality of first molded bodies 11 (shown by the speckled figures in FIGURE 2) and second molded bodies 12 (shown by the plain figures in FIGURE 2) are molded in an outsert manner on specific positions selectively using first and second thermoplastic materials having different shrinkage factors. These first and second molded bodies 11 and 12 include tape drive members comprising a tape driving system for driving a tape travel including a tape guide mechanism, tape loading parts comprising a tape loading system for loading a magnetic tape wound in a cassette onto a rotary cylinder on which rotary heads are mounted, cassette guiding parts comprising a cassette loading system to load the cassette to a tape driving position and mounting base members having various characteristics such as an erasing head mounting hook, for example.

The molded bodies for the tape travel drive system contains a cylinder base 111 for mounting a cylinder as the first molded body reel posts112 for supporting a reel base adapted for engaging with a tape reel provided in cassettes; guide posts 113, 114 for supporting a tape in travel; support posts 115, 116, 117, 118, for supporting mechanical members such as a pinch-lever.

The molded bodies for the tape loading system contain a base 119 as the first molded body on which a tape pull-out member movable along guide grooves 10a, 10b to load the tape on the cylinder is pressed after the tape loading is completed.

Further as the second molded bodies there are fixing members 122 for fixing a circuit board at the other side of the chassis and fixing members 123 for fixing erasure heads.

The first molded bodies 11 are such parts as mounting base members for installing the rotary cylinder of the tape driving system out of the mounting base members for which high strength and high accuracy are rigorously demanded and are molded in an outsert manner using first thermoplastic materials that have low shrinkage factors and high molding die copying property, for instance, polyphenylene sulfide (PPS). PPS that have mechanical characteristics of shrinkage factors 0.2% through 0.4% (flowing direction) and 0.6 - 0,8% (right angle direction), coefficient of linear expansion of 0.7 x 10⁻⁵ cm/cm° C (flowing direction) and 6.2 x 10⁻⁵ cm/cm° C (right angle direction), modulus of bending elasticity 13 x 10⁻⁴ kgf/cm², tensile strength 1800 kgf/cm² and deflection temperature under load 270° C are suitable, and parts are molded in an outsert manner at a molding die temperature 150° C.

On the other hand, the second molded bodies 12 are parts such as mounting hooks, etc., for which an elasticity is demanded but relatively low strength and accuracy are demanded, and materials with a relatively high shrinkage factor and a relatively low mold copying property in comparison to the PPS as described above, for instance, a polyoxymethylene (POM) is used for the outsert molding. As such POMs, ones having mechanical characteristics of a shrinkage factor of 1.5 % through 3.5 %, a linear expansion factor of 10 x 10⁻⁵ cm/cm·°C, modulus of bending elasticity 2.6 x 10⁴ kgf/cm², a tensile strength of 620 kgf/cm² and a deflection temperature under load 11° C are suitable and parts are molded in an outsert manner at the molding die temperature of 80° C.

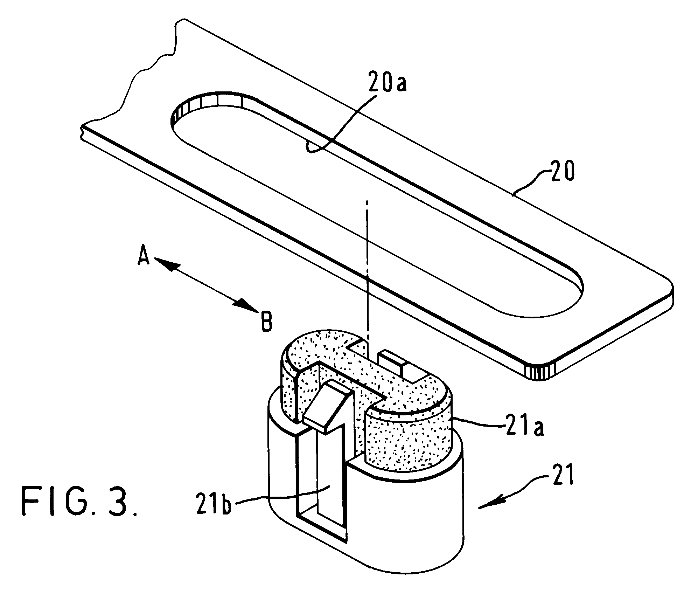

Further, third molded bodies having many structural sections are molded in an outsert manner on the metal plate 10 to be integral therewith, using both the first and the second thermoplastic materials. As a third molded body there is, for instance, a guide support member 21 of a driving slider 20 which controls the operation of the tape pull-out mechanism of the tape loading system shown in FIGURE 3. This guide support member 21 is comprised of a guide portion 21a movably engaged with the guide hole 20a of the driving slider 20 and an elastic engaging portion 21b, which is elastically engaged with the guide portion 21a, and is engaged with the side of the guide hole 20a of the driving slider 20 movably and,while supporting the driving slider 20 by the elastic engaged portion 21b, controls the position of the guide hole 20a of the driving slider 20 by moving it in the direction of arrow A or B by the guide portion 21a.

The guide portion 21a of this guide support member 21 is molded in an outsert manner using the first thermoplastic material and the elastic engaging portion 21b is integrally molded in an outsert manner to this guide portion 21a using the second thermoplastic material. Thus, the guide portion 21a of the guide support member 21 satisfies the demands for strength and accuracy by the first thermoplastic material characteristics and the elastic engaging portion 21b satisfies demands for strength and accuracy lower than the guide portion 21a and a demand for required elasticity by the second thermoplastic material characteristics.

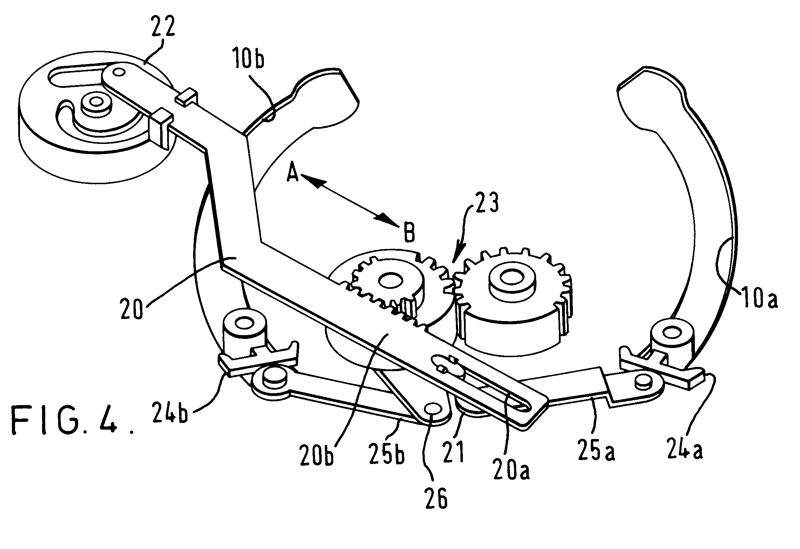

As illustrated in FIGURE 4, one end of the driving slider 20 is movably engaged with a mode switching cam 22 of a magnetic recording/reproducing apparatus and a driving tooth portion 20b is provided between the driving slider 20 and the mode switching cam 22. A gear mechanism 23 is engaged with this driving tooth portion 20b movably and tape pull-out members 24a, 24b for a tape supply and a tape take-up are linked to this gear mechanism 23 via link mechanisms 25, 26. These tape pull-out members 24a, 24b are inserted movably into a pair of guide grooves 10a, 10b which are defined on the metal plate 10. These guide grooves 10a, 10b, shown in FIGURE 4, are defined to correspond to the feeding and take-up sides of the rotary cylinder to which the rotary head is mounted. Thus, when the mode switching cam 22 is driven to rotate by a driving force transmitted from a driving source (not shown), the driving slider is guided and forced to move in the direction of arrow A or B. At this time, the driving slider 20 drives the gear mechanism 23 by its driving tooth portion 20b. Interlocking with the driving slider, the gear mechanism 23 actuates and controls the tape pull-out members 24a, 24b to move along the guide grooves 10a, 10b and executes the loading or unloading of a magnetic tape in a tape cassette (not shown).

Further, the second molded bodies 12 on the metal plate 10 include mounting base members, for instance, an electric circuit substrate supporting hook, etc. in addition to the tape driving system, tape loading system and cassette loading system.

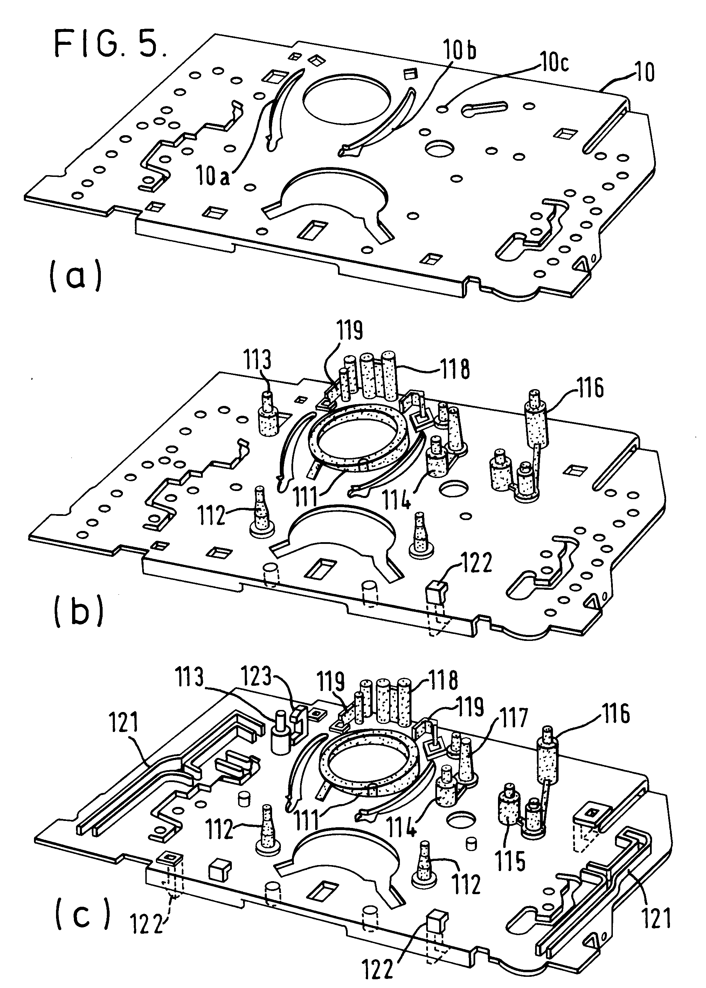

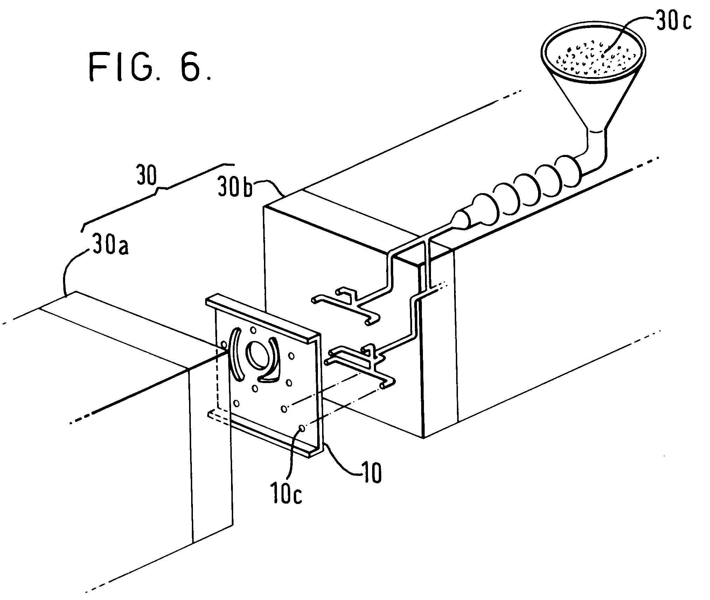

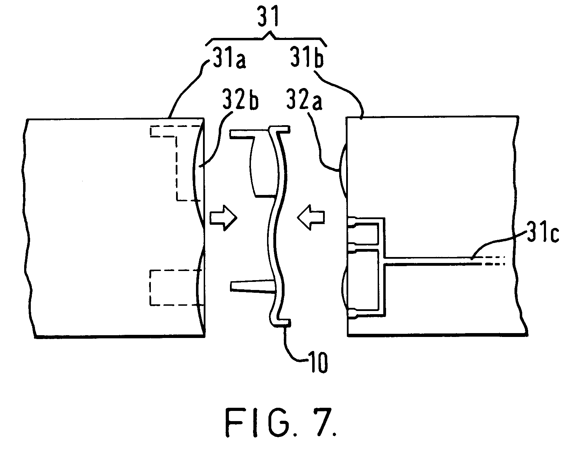

As a manufacturing method of a chassis for magnetic recording/reproducing apparatus in the structure as described above, a nearly flat-shaped metal plate 10 is machined for defining a plurality of molded body mounting portions at specific positions on the metal plate 10 as illustrated in FIGURE 5(a). Then, the metal plate 10 is mounted between the core side of a first outsert molding machine 30 and cavity side molding dies 30a, 30b as illustrated in FIGURE 6. Here, the first thermoplastic material having a low shrinkage factor and high copying property is fed to the cavity side molding die 30b of the first outsert molding machine 30 and the first molded bodies 11 are molded in an outsert manner at the molded body mounting portion 10c of the metal plate 10 (see FIGURE 5(b)). Thereafter, the metal plate 10 with the first molded bodies 11 molded in an outsert manner is removed from the first outsert molding machine 30 and mounted between the core side of a second outsert molding machine 31 and cavity side molding dies 31a, 31b as illustrated in FIGURE 7.

Here, the second molded bodies 12 are molded in an outsert manner at specified molded body mounting portions 10c of the metal plate 10 by a second outsert molding machine 31 using the second thermoplastic material having a higher shrinkage factor than the first thermoplastic material (see FIGURE 5(c)). Then, both sides of the metal plate 10 after completed the outsert molding are bent so that a pair of cassette guide portions 121 of the second molded body 12, which are molded in the outsert manner on both sides, will correspond to the cassette traveling direction.

Further, on the metal plate 10 after completed the outsert molding of mounting parts, parts for constituting the tape driving system, the tape loading system, or the cassette loading system, etc. are mounted on the first and the second molded bodies 11, 12 in the next assembling process, thus for resulting a magnetic recording/reproducing apparatus.

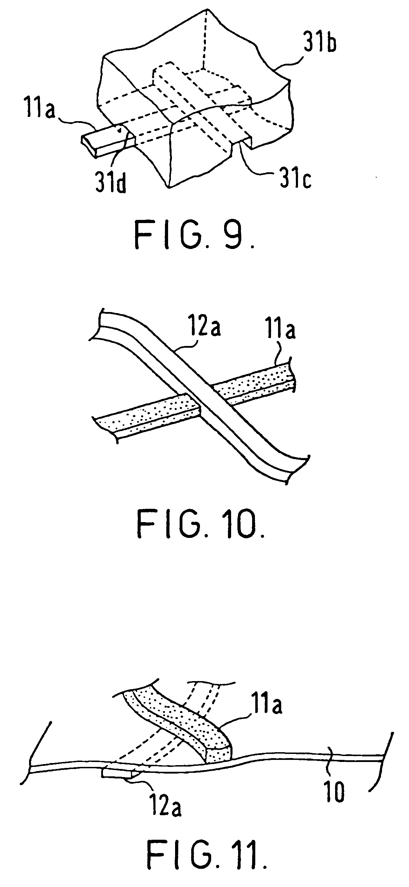

On the molding die 31b of the second outsert molding machine 31, a runner portion 31c for introducing plastic materials and a runner escaping groove 31d are provided in corresponding to the already formed runner 11a for the first molded bodies 11 as shown in FIGURE 9. Further, the runner 31c of the molding die 31b is arranged to cross the runner 11a for the first molded bodies 11. As a result, the runner 12a formed on the metal plate 10 by the outsert molding of the second molded body 12 is forced to cross over the runner 11a formed on the metal plate 10 when the first molded bodies are molded in an outsert manner (see FIGURE 11) or is formed by crossing it via the metal plate 10 (see FIGURE 11). Thus, the outsert molding of the first and the second molded bodies 11, 12 at a high density on the metal plate 10 becomes possible.

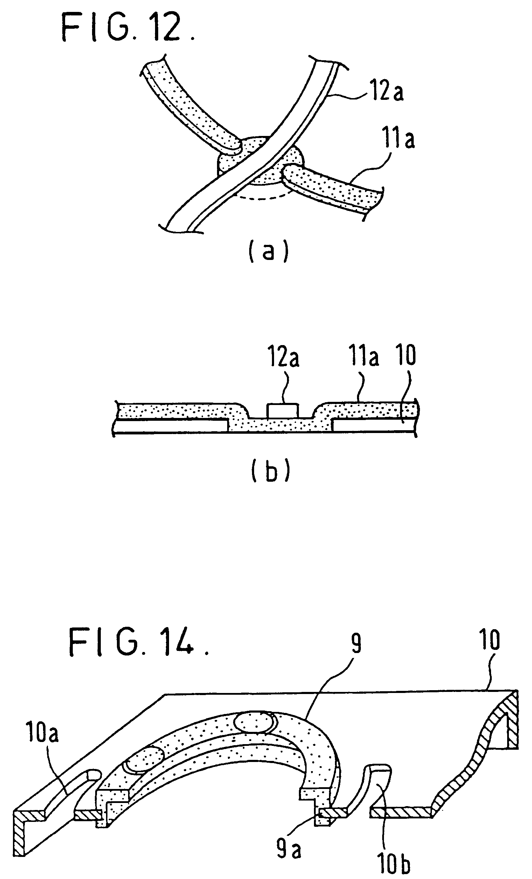

Further, the runner 11a of the first molded bodies 11 out of the runners 11a, 12a formed on the metal plate 10 in the outsert molding of the first and the second molded bodies 11, 12 may be formed to comprise a part of the metal plate 10 and arrange the runner 12a formed in molding the second molded bodies 12 over this runner 11a, as illustrated in FIGURES 12(a), 12(b). Thus, the outsert molding of the first and the second molded bodies 11, 12 at a high density on the metal plate 10 and the achievement of a thinner chassis are assured.

As illustrated in FIGURE 7, deformation correcting portions 32a, 32b are provided at less strong points of the metal plate 10, for instance, molded in an outsert manner points near a relatively large hole corresponding to the molding dies 31a, 31b of the second outsert molding machine 31. When the second outsert molding machine 31 is run to press the molding dies 31a, 31b to contact with each other, these deformation correcting portions 32a, 32b correct thermal deformations produced on the metal plate 10 during the outsert molding of the first molded bodies 11. Thus, it becomes possible to perform the outsert molding of the first and the second molded bodies 11, 12 on the metal plate 10 in the minimum process.

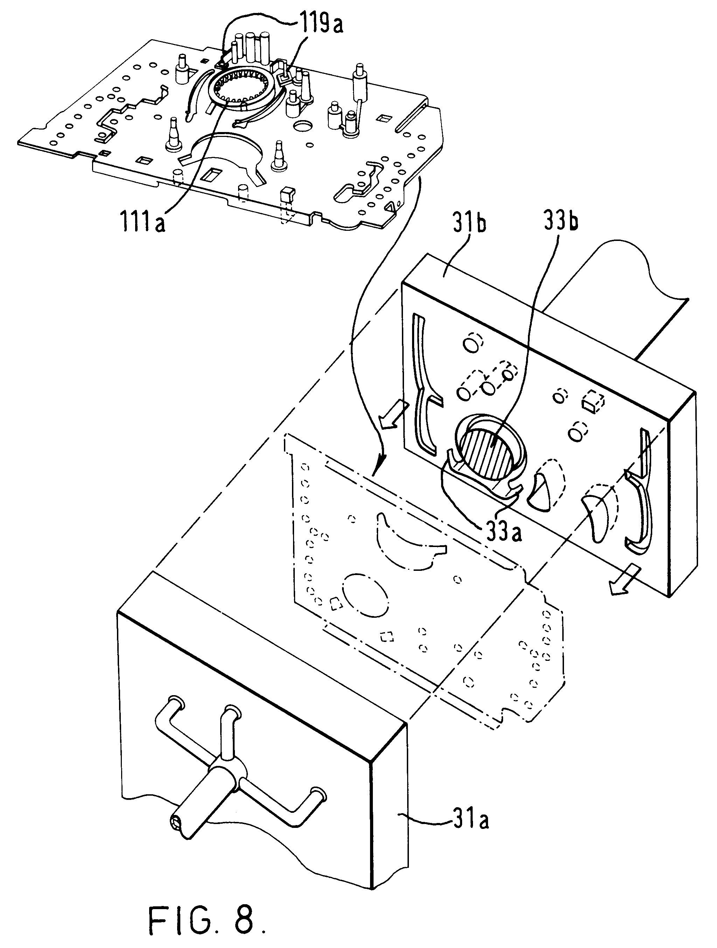

Further, as shown in FIGURE 8 cut-outs 33a, 33b for removing undesired molded bodies 111a, 119b such as burrs, etc., made during the molding of the first molded bodies 11 is provided to the molding dies 31a, 31b of the second outsert molding machine 31. Thus, through the cut-outs 33a, 33b, the molding dies 31a, 31b remove the undesired molded bodies 111a, 119b produced on the metal plate 10 during the outsert molding by the second outsert molding machine 31. As a result, the outsert molding of the first and the second molded bodies 11, 12 becomes possible in the minimum process. Further, the undesired molded bodies may include, for instance, the runner 11a formed on the metal plate 10 in the outsert molding.

Further, when molding the third molded bodies, for example, the guide support member 21, in the outsert manner the guide portion 21a for which high strength and high accuracy are rigorously demanded is molded in an outsert manner using the first thermoplastic material at the specific position on the metal plate 10 by the first outsert molding machine 30. Then, the metal plate 10 is mounted to the second outsert molding machine 31 and the elastic engaging portion 21b for which a low strength and low accuracy are demanded but strong elasticity is demanded is integrally molded in an outsert manner around the guide portion 21a using the second thermoplastic material.

As described above, the chassis for magnetic recording/reproducing apparatus has been constructed by providing the first and the second molded bodies 11, 12 for the parts comprising the tape driving system and the tape loading system formed by molding in the outsert manner the first and the second thermoplastic materials which are different each other in their properties, respectively, on the metal plate 10.

According to the construction described above, as the parts are molded in an outsert manner using the first and the second thermoplastic materials having different shrinkage factors selectively, it becomes possible to perform the outsert molding of the first and the second molded bodies 11, 12 having various characteristics, such as the mounting base members constituting the rotary cylinder, for which a high strength and a high accuracy are rigorously demanded, or mounting hooks, etc., for which a relatively low strength and a low accuracy are demanded out of the parts comprising the tape driving system and the tape loading system. As a result, it becomes possible to mold in the outsert manner the mounting base members so far requiring fastenings with screws, caulking, etc., and it also becomes possible to simplify the manufacturing and assembling operationg, promote downsizing and achieve a light weight.

Further, in the manufacturing method of the chassis for magnetic recording/reproducing apparatus, the first and the second molded bodies 11, 12 such as the mounting base members constituting the tape driving system and the tape loading system are formed by molding in the outsert manner the first and the second thermoplastic materials which are different each other in their properties, starting from one with the highest thermal denaturation temperature on the metal plate 10.

According to the manufacturing method described above, the outsert molding of the first and the second thermoplastic materials which are different each other in their properties becomes possible and the outsert molding of the first and the second molded bodies 11, 12 having various characteristics, such as the mounting base members for mounting thereto the rotary cylinder, for which a high strength and a high accuracy are demanded, and also the other mounting base members such as mounting hooks, etc., for which a relatively low strength and a low accuracy are demanded based on the characteristics of the first and the second thermoplastic materials becomes possible. As a result, it becomes possible to mold in the outsert manner the mounting base members so far requiring fastenings with screws, caulking, etc., and it also becomes possible to simplify the manufacturing and assembling operations, promote downsizing and achieve a light weight.

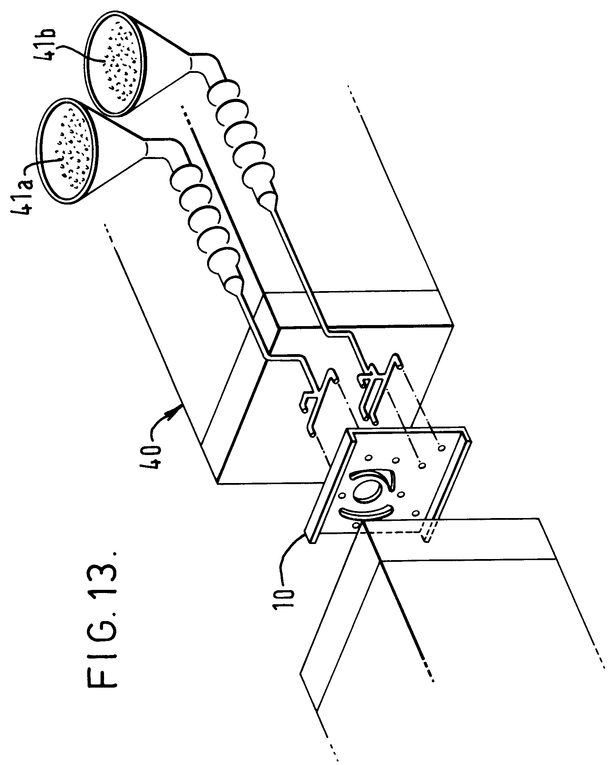

Further, in the first embodiment as described above, the present invention has been explained taking the case where the embodiment is so constructed that the outsert molding is performed using the first and the second outsert molding machines 30, 31 by feeding the first and the second thermoplastic materials at a predetermined time sequence. However, the present invention is not limited to such embodiments but it is also possible to construct another embodiment so that the first and the second molded bodies 11, 12 are molded almost simultaneously in an outsert manner on the metal plate 10, by feeding the first and the second thermoplastic materials having different shrinkage factors almost at the same time from a first and a second feeders 41a, 41b of a single outsert molding machine 40, as illustrated in FIGURE 13. In this case, the first and the second thermoplastic materials having mutually adaptable characteristics are set and the molding die temperature of the outsert molding machine 40 is set at a level suited for molding in the outsert manner both of the first and the second thermoplastic materials.

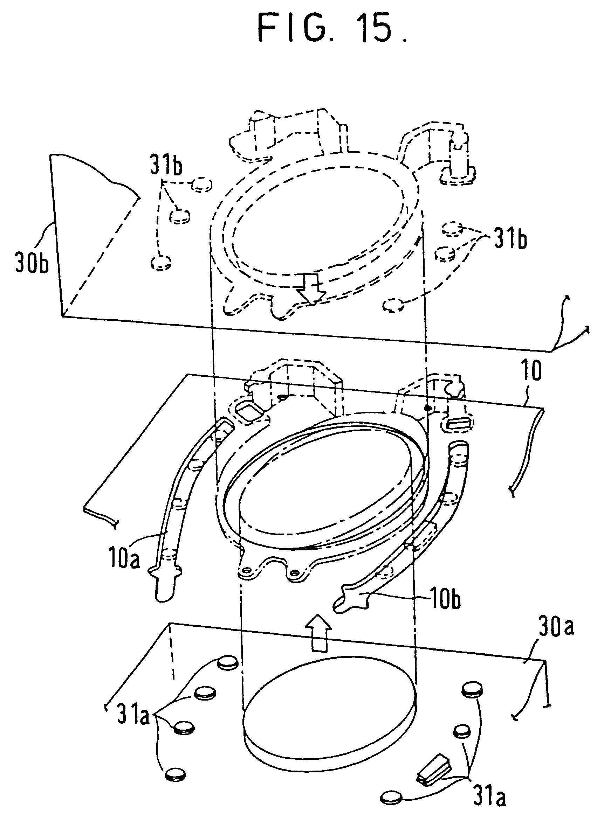

Hereinafter, a second embodiment of the present invention will be described in detail with reference to the drawings FIGURES 14 through 18. Throughout the drawings, reference numerals or letters in FIGURES 2 through 13 of the first embodiment will be used to designate like or equivalent elements for simplicity of explanation.

FIGURE 14 shows essential parts of a chassis for magnetic recording/reproducing apparatus involved in an embodiment of the present invention and a cylinder mount 9 is molded in an outsert manner on a metal plate 10. The cylinder mount 9 has a thin portion 9a molded in an outsert manner on the side wall facing a metal plate 10 which is thinner in thickness than other portions for reducing molding pressures. A rotary cylinder (not shown) to which a rotary head is mounted is fixed to this mount 9a. Tape feeding and take-up side guide grooves 10a, 10b for guiding a tape pull-out member of a tape loading system are suppressed to prevent their deformation at around the cylinder mount 9 on the metal plate.

Further, in a similar manner to FIGURE 2 of the first embodiment, a plurality of first molded bodies 11 and second molded bodies 12 comprising a magnetic recording/reproducing apparatus are molded in an outsert manner at specific positions on the metal plate 10 using a first and a second thermoplastic materials having different shrinkage factors.

As a manufacturing method of a chassis for magnetic recording/reproducing apparatus in the structure as described above, first of all, a nearly plate shaped metal plate 10 is machined for defining a plurality of molded body mounting portions 10b at specific positions on the metal plate 10, as illustrated in FIGURE 5(a). Then, the metal plate 10 is mounted between the core side of a first outsert molding machine 30 and cavity side molding dies 30a, 30b as illustrated in FIGURE 6. On this first outsert molding machine 30, a convex portion 31a for controlling thermal deformation is provided to the core side molding die 30a corresponding to the guide grooves 10a, 10b and a concave potion 31b for controlling thermal deformation is provided to the cavity side molding die 31a corresponding to the core side projection 31a as illustrated in FIGURE 15. When molding dies 30a, 30b are joined together via the metal plate 10, these projection 31a and the depression 31b are accommodated in the guide grooves 10a, 10b for the position defining wall of the guide grooves 10a, 10b.

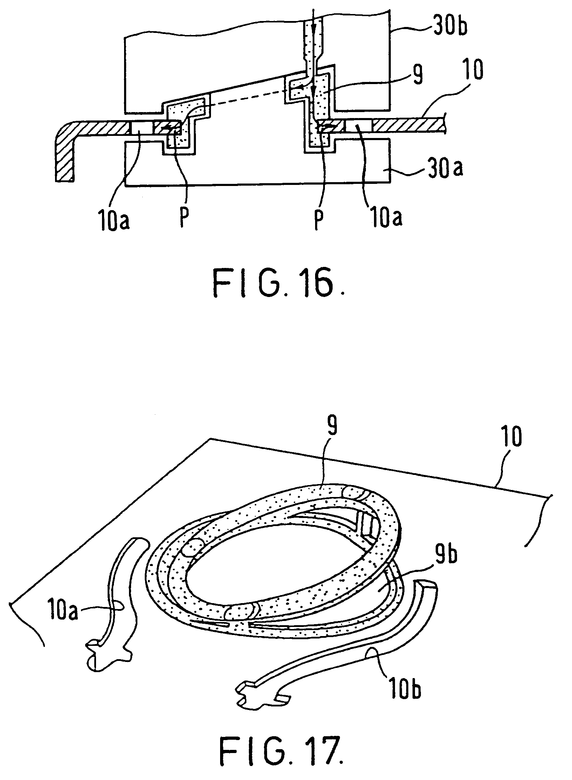

Under this state, the first thermoplastic material having a low shrinkage factor and high copying property is fed from a feeder 30c to the cavity side molding die 30b of the first outsert molding machine 30 and the first molded bodies 11 including the cylinder mount 9 are molded in the outsert manner on the molded body mounting portions 10c of the metal plate 10 (see FIGURE 5(b)). Here, the molding dies 30a, 30b are directly applied with molding pressures generated from the outsert molding of the cylinder mount 9 by the action of the projection 31a and the depression 31b and prevent deformation near the guide grooves of the metal plate 10. At the same time, because the thin portion 9a is formed thinner in thickness than other portions, the cylinder mount 9 accelerates prevention of deformation near the guide grooves on the metal plate 10 as the molding pressure P applied to the metal plate 10 is suppressed to prevent the deformation but with a weaker level than other portions, as shown in FIGURE 16.

Then, the metal plate 10 with the first molded bodies 11 molded in an outsert manner is removed from the first outsert molding machine 30 and mounted to the second outsert melding machine which is in the almost same construction as the first outsert molding machine 30 and the second molded bodies 12 are molded in an outsert manner on the specific molded body mounting portion 10c using the second thermoplastic material having a higher shrinkage factor than the first thermoplastic material (see FIGURE 5(c)). Then, after the outsert molding completed, the metal plate 10 is bent so that a pair of cassette guide portions 121 of the second molded bodies 12, which are molded in an outsert manner at its both ends will correspond to the cassette traveling direction as illustrated in FIGURE 2.

Further, on the metal plate 10 with molded in an outsert manner goods, parts of the first and the second molded bodies 11, 12 for the tape driving system, tape loading system, cassette loading system, etc. are assembled and internal equipment of a magnetic recording/reproducing apparatus are formed in the next assembly process.

As described above, the chassis for magnetic recording/reproducing apparatus has been so constructed that the thin thickness portion 9a is provided at the side wall portion of the metal plate 10 facing the guide grooves 10a, 10b of which strength is relatively weak for the cylinder mount 9 that has been molded in an outsert manner on the metal plate 10.

According to the structure described above, as molding pressures given to the guide grooves 10a, 10b of the metal plate 10 in the outsert molding of the cylinder mount is reduced, a highly reliable molding is achieved and also a high density mounting of molded bodies is easily achieved. As a result, it becomes possible to mold in the outsert manner mounting base members which previously required fastening with screws or caulking such as those for which high strength and high accuracy are rigorously demanded out of various parts comprising the tape driving system and tape loading system and such parts as mounting hooks, etc. for which relatively low strength and lower accuracy are demanded and it also becomes possible to simplify the manufacturing and assembling operations, promote downsizing and achieve light weight of the chassis.

Further, in the manufacturing method of the chassis for magnetic recording/reproducing apparatus described above, during the outsert molding, the vicinity of the guide grooves 10a, 10b of the metal plate, which are relatively weak in strength, is suppressed to prevent the deformation of the metal plate 10 caused by molding pressures.

According to the structure described above, a highly reliable molding is achieved and also a high density mounting of molded bodies is easily achieved as the deformation of the metal plate produced by molding pressures when the cylinder mounting 9 is molded in an outsert manner on the metal plate 10 is surely prevented. As a result, it becomes possible to mold in the outsert manner many molded bodies having various characteristic such as those mounting base members previously requiring fastening with screws, caulking, those parts for which high strength and high accuracy are rigorously demanded out of various parts comprising the tape driving system and the tape loading system and such parts as mounting hooks, for which relatively low strength and lower accuracy are demanded and it also becomes possible to simplify the manufacturing and assembling operations, promote downsizing and achieve light weight of the chassis.

Further, in the second embodiment described above, the present invention has been explained taking the case where the thin thickness portion 9 is provided at the side wall portion of the cylinder mount 9 to reduce the molding pressure P in the guide grooves 10a, 10b, However, the present invention is not limited to this embodiment but may be embodied in such a construction that a window portion 9a is provided at the side wall of the cylinder mount 9 facing the guide grooves 10a, 10b of the metal plate 10, as illustrated in FIGURE 17, and the molding pressure produced in the direction of the guide grooves is reduced by the action of this window portion 9b.

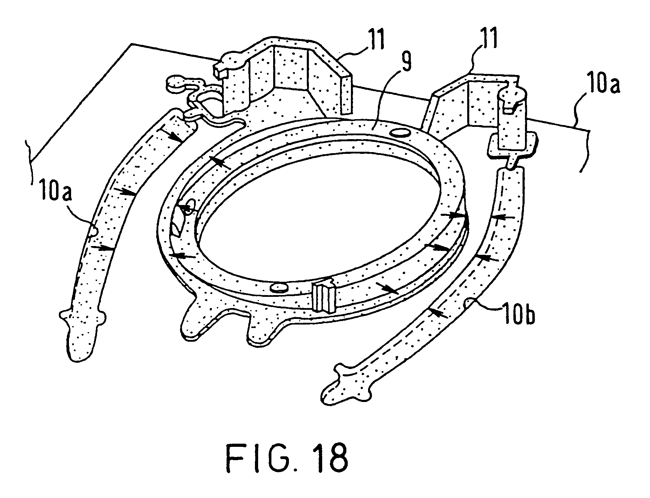

Further, in the second embodiment described above, the present invention has been explained taking the case where the projection 31a and the depression 31b are provided to the molding dies 30a, 30b and the guide grooves 10a, 10b are defined by these projection 31a and the depression 31b in the outsert molding. However, the present invention is not limited to this embodiment but may be embodied in such a construction as the deformation around the guide grooves on the metal plate 10 are prevented by filling the guide grooves 10a, 10b with the first thermoplastic material which is used in the outsert molding, as illustrated in FIGURE 18.

Further, in the second embodiment described above, the present invention has been explained taking the case where the invention is applied to the cylinder mount 9 of the first molded body 11 molded in the outsert manner using the first thermoplastic material. However, the present invention is not limited to this embodiment but can be applied to other first molded body 11 and to second molded bodies 12 that are molded in the outsert manner using the second thermoplastic material.

Further, in the second embodiment as described above, it was constructed to mold in the outsert manner two types of molded bodies using two types of thermoplastic materials with two outsert molding machines. However, the present invention is not limited to this embodiment but can be applied to the outsert molding of at least one type of molded body.

Further, in each of the embodiments as described above, the present invention has been explained taking the case where the embodiment is so constructed that two types of molded bodies are formed using two types of thermoplastic materials. However, the present invention is not limited to this embodiment but it is also possible to construct the application to form more than two types of molded bodies using more than two types of thermoplastic materials.

Further, in the embodiments as described above, the present invention has been explained taking the case where the present invention is applied to the chassis of magnetic recording/reproducing apparatus, in which the cassette loading system is constructed jointly with both the tape driving system and the tape loading system. However, the present invention is not limited to this embodiment but the almost same effect can be expected by applying the present invention to a chassis of magnetic recording/reproducing apparatus in which at least two of the tape driving system and the tape loading system are constructed.

Further, in the embodiments as described above, the present invention has been explained taking the case where the cassette guiding portion 121 of the cassette loading system is arranged at the bent portion after the outsert molding of the first and the second molded bodies 11, 12 on the metal plate 10 is completed. However, the present invention is not limited to this embodiment but is also applicable to a chassis in such a structure that the metal plate 10 is not bent in the state where the first and the second molded bodies 11, 12 have been formed on the metal plate 10.

Further, in the embodiments described above, the present invention has been explained by taking the case where the present invention is applied to a VTR as a magnetic recording/reproducing apparatus. However, the present invention is not limited to this embodiment but is applicable to various magnetic recording/reproducing apparatus such as a DAT, etc.

So, needless to say, the present invention is not limited to the embodiment described above but may be embodied in various forms without departing from the spirit and the scope thereof.

As described above, according to the present invention it is possible to provide a chassis for magnetic recording/reproducing apparatus, which is capable of reducing the parts count, simplifying the manufacturing process, promoting downsizing and achieving light weight in simple construction and a manufacturing method of the chassis.

As described above, the present invention can provide an extremely preferable chassis for magnetic recording/reproducing apparatus.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefor, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A chassis, for a magnetic recording/reproducing apparatus provided with a metal plate, and comprising:
a plurality of molded bodies molded in an outsert manner on the metal plate using a plurality of thermoplastic materials which have different properties, to support a tape driving system for the apparatus.

2. A chassis for a magnetic recording/reproducing apparatus as claimed in claim 1, characterized in that the molded bodies are composed of many parts which are molded in the outsert manner using different types of thermoplastic materials.

3. Method for manufacturing a chassis for a magnetic recording/reproducing apparatus having at least a tape driving system mounted on a metal plate comprising the steps of:
molding in an outsert manner a plurality of molded bodies on the metal plate by feeding a plurality of thermoplastic materials which have different properties, starting from the one with the highest thermal denaturation temperature; and
mounting parts constituting the tape driving system onto the molded bodies.

4. Method for manufacturing a chassis for a magnetic recording/reproducing apparatus as claimed in claim 3, characterized in that a molding die to be used in the outsert molding is changed in each of a plurality of thermoplastic materials, and in that a cut-out is provided to a molding die for a later stage to remove undesired molded bodies produced on the metal plate during the outsert molding in a previous stage by the cut-out during the outsert molding at the later stage.

5. Method for manufacturing a chassis for a magnetic recording/reproducing apparatus as claimed in claim 3, characterized in that a molding die to be used in the outsert molding is changed for each of a plurality of thermoplastic materials, a correcting portion is provided to a molding die for a latter stage to correct deformations produced on the metal plate during the outsert molding in a previous stage, and the deformations produced on the metal plate during the outsert molding in the previous stage are corrected during the outsert molding in the latter stage.

6. Method for manufacturing a chassis for a magnetic recording/reproducing apparatus as claimed in claim 3, characterized in that the molded bodies have a plurality of parts, and after the outsert molding process some of these parts using a single type of thermoplastic material, and other parts are integrally molded in an outsert manner using more than one type of the thermoplastic materials.

7. Method for manufacturing a chassis for a magnetic recording/reproducing apparatus as claimed in claim 3, characterized in that a runner for pouring the thermoplastic materials into the molded body portion of a molding die to be used in the outsert molding is provided to cross a runner that is formed on the metal plate during the outsert molding of another type of thermoplastic material which has been carried out previously.

8. Method for manufacturing a chassis for a magnetic recording/reproducing apparatus as claimed in claim 3, characterized in that a runner for pouring the thermoplastic material into the molded body portion of a molding die to be used in the outsert molding is provided on one side of the metal plate to cross another runner formed for the thermoplastic material on the other side of the metal plate.

9. Method of manufacturing a chassis for a magnetic recording/reproducing apparatus as claimed in claim 7 or claim 8, characterized in that one of a pair of the runners formed crossing each other on the metal plate is contiguous with the metal plate at the intersecting point.

10. Method for manufacturing a chassis for a magnetic recording/reproducing apparatus having at least a tape driving system molded on a metal plate, comprising the steps of:
molding in an outsert manner a plurality of molded bodies on the metal plate by feeding almost simultaneously a plurality of thermoplastic materials having different properties; and
mounting parts constituting the tape driving system onto the molded bodies.

11. A chassis for a magnetic recording/reproducing apparatus comprising at least a tape driving system mounted on a metal plate, comprising:
a structural part receiving hole provided on the metal plate into which parts of the tape driving system are assembled; and
a molded body which is molded in an outsert manner on the metal plate around the structural part receiving hole, of which side wall thickness facing the wall of the structural part receiving hole is thinner than the thickness of other portions.

12. A chassis for a magnetic recording/reproducing apparatus comprising at least a tape driving system mounted on a metal plate, comprising:
a structural part receiving hole provided on a metal plate into which parts of the tape driving system are assembled; and
a molded body which is molded in an outsert manner near the structural part receiving hole on the metal plate and is provided with a window on the side wall facing the structural part receiving hole.

13. A chassis for a magnetic recording/reproducing apparatus as claimed in claim 11 or claim 12, further comprising a tape loading system wherein the molded body is a rotary cylinder mounting member with a rotary head mounted, and the structural part receiving hole is a groove for guiding a tape pull-out member of the tape loading system.

14. Method for manufacturing a chassis for a magnetic recording/reproducing apparatus by loading a metal plate in an outsert molding machine and forming a plurality of molded bodies including parts comprising at least a tape driving system by molding in an outsert manner thermoplastic materials,
characterized in that the deformation of the metal plate is suppressed in the vicinity of the outsert molding point on the metal plate to prevent the deformation when the molded body is molded in the outsert manner.

15. Method for manufacturing a chassis for a magnetic recording/reproducing apparatus as claimed in claim 14,
characterized in that a deformation suppressing portion is provided to a molding die of the outsert molding machine to suppress the deformation of the metal plate in the vicinity of the structural part receiving hole defined on the metal plate so as to prevent the deformation of the metal plate caused by a molding pressure.

16. Method for manufacturing a chassis for a magnetic recording/reproducing apparatus as claimed in claim 14,
characterized in that when the molded body is molded in an outsert manner on the metal plate using the outsert molding machine, the deformation of the metal plate is suppressed by filling a structural part receiving hole defined on the metal plate with thermoplastic materials to prevent the deformation of the metal plate caused by the molding pressure.

17. A chassis for a magnetic recording/reproducing apparatus comprising a cassette loading system for loading a cassette in a tape drive section, a tape loading system for loading a tape pulled-out from the cassette loaded in the tape drive section on a cylinder provided with recording/reproducing heads, and a tape travel drive system for driving the tape to travel along a predetermined path, comprising:
a metal plate having two edges which are formed to face each other by bending parts of the metal plate, thus accommodating the cassette loading system on the edges and the tape loading system and the tape travel drive system between the edges.

18. Method for manufacturing a chassis for a magnetic recording/reproducing apparatus comprising a cassette loading system for loading a cassette in a tape drive section, a tape loading system for loading a tape pulled-out from the cassette loaded in the tape drive section on a cylinder provided with recording/reproducing heads, and a tape travel drive system for driving the tape to travel along a predetermined path, comprising:
forming on a metal plate a plurality of molded bodies which constitute each of the systems by molding thermoplastic materials in an outsert manner;
bending parts of the metal plate into two edges facing each other so that the metal plate accommodates the cassette loading system on the edges and the tape loading system and the tape travel drive system between the edges.

19. Method for manufacturing a chassis for a magnetic recording/reproducing apparatus as claimed in claim 18, wherein the bodies for the tape loading system and the tape travel drive system are molded from polyphenylene-sulfide, while the bodies for the cassette loading system are molded from polyoxymethylene.
